# EUROPÄISCHE PATENTSCHRIFT

(11) **EP 1 040 346 B1**
(45) Veröffentlichungstag und Bekanntmachung des Hinweises auf die Patenterteilung: **16.04.2008**
(21) Anmeldenummer: 99938187.4
(22) Anmeldetag: 12.06.1999
(51) Int. Cl.: G01N 27/407

(54) **FESTELEKTROLYT-GASSENSOR UND VERFAHREN ZU DESSEN HERSTELLUNG**
SOLID ELECTROLYTE GAS SENSOR AND CORRESPONDING PRODUCTION METHOD
DETECTEUR DE GAZ A ELECTROLYTE SOLIDE ET SON PROCEDE DE FABRICATION

(30) Priorität: 23.07.1998 DE 19833087
(43) Veröffentlichungstag der Anmeldung: 04.10.2000
(73) Patentinhaber: ROBERT BOSCH GMBH, 70442 Stuttgart (DE)
(72) Erfinder: SCHNEIDER, Jens, Stefan, Anderson, SC 29622 (US); NEUMANN, Harald, D-71665 Vaihingen (DE); RIEGEL, Johann, D-74321 Bietigheim-Bissingen (DE); STANGLMEIER, Frank, D-71696 Moeglingen (DE); SCHUMANN, Bernd, D-71277 Rutesheim (DE)
(86) Internationale Anmeldenummer: PCT/DE1999/001727
(87) Internationale Veröffentlichungsnummer: WO 2000/005573

(56) Entgegenhaltungen:
- EP-A- 0 331 050
- EP-A- 0 372 425
- DE-A- 4 004 172
- DE-A- 4 131 503
- DE-A- 4 408 504
- DE-A- 19 700 700
- DE-C- 4 100 106
- GB-A- 2 066 478

## Beschreibung

### Stand der Technik

Die Erfindung bezieht sich auf einen Gassensor nach dem Oberbegriff des Anspruchs 1 sowie auf ein Verfahren zur Herstellung des Gassensors.

Aus der DE-OS 23 04 464 ist ein Meßfühler bekannt, bei dem eine die Gleichgewichtseinstellung des Gasgemisches nicht katalysierende Elektrode aus Gold oder Silber vorgesehen ist, die mit einer die Gleichgewichtseinstellung des Meßgases katalysierenden Elektrode aus Platin zusammenwirkt. Die katalytisch inaktiven Elektrodenmaterialien bewirken, daß an der Elektrode zwischen dem Sauerstoff und den oxidierbaren bzw. reduzierbaren Gaskomponenten eine Konkurrenzreaktion stattfindet. Dadurch wird selbst bei eingeregelten hohen Lambda-Werten der im Meßgas mitgeführte freie Sauerstoff mit beispielsweise C₃H₆ oder CO kaum umgesetzt, so daß sowohl freier Sauerstoff wie auch C₃H₆ bzw. CO die Drei-Phasen-Grenze an der katalytisch inaktiven Elektrode erreichen (Ungleichgewichtszustand).

Aus der EP 466 020 A ist ein Gassensor mit einer Meßelektrode und einer Referenzelektrode bekannt, die auf einem Festelektrolyten aufgebracht sind. Zur Ausbildung einer Mischpotentialelektrode besteht die Meßelektrode aus einer Platinverbindung oder einer ternären Legierung aus Platin, Gold, Nickel, Kupfer, Rhodium, Ruthenium, Palladium oder Titan. Die Materialien können dabei auch als Mehrfachlagen auf dem Festelektrolyten aufgebracht werden, wobei der Legierungschritt nach dem Aufbringen der Materialien erfolgt.

Aus der US-PS 4 199 425 ist ferner ein Gassensor bekannt, bei dem eine Elektrode aus Platin vorgesehen ist, die mit einer porösen Deckschicht bedeckt ist. In den Poren der Deckschicht ist ein weiteres katalytisches Material, Rhodium, durch Imprägnieren eingebracht. Das Rhodium hat die Aufgabe den Gassensor neben der Sauerstoffempfindlichkeit auch empfindlich gegenüber NOₓ auszubilden. Das Rhodium legt sich dabei in die Wände der Poren der gesamten Deckschicht, so daß keine gezielte Schichtdicke in der porösen Deckschicht ausbildbar ist. GB 20 66 478 offenbart einen Festelektrolyt-Gassensor, wobei die Messelektrode aus 2 Schichten besteht und von einer porösen Schutzschicht bedeckt ist.

### Vorteile der Erfindung

Der erfindungsgemäße Gassensor mit den kennzeichnenden Merkmalen des Anspruchs 1 hat den Vorteil, daß ein gesinterter Sensorelement-Basiskörper verwendet werden kann, wobei lediglich durch einen zusätzlichen Abscheidungsschritt die weitere Schicht nach dem Sintern integriert wird. Dadurch ist die äußere Elektrode des Sensorelement-Basiskörpers nach dem Sintern modifizierbar. Als Sensorelement-Basiskörper ist beispielsweise das Sensorelement einer Lambda-Sonde vom Nernst-Typ verwendbar, wobei durch die Modifizierung der äußeren Elektrode diese zu einer Mischpotentialelektrode umformiert wird. Vorteilhaft ist ferner, daß für die weiteren Schichten Materialien verwendet werden können, die sonst der hohen Sintertemperatur nicht standhalten würden. Ein weiterer Vorteil besteht ferner darin, daß das unmittelbar benachbart zur elektrisch leitenden Basisschicht angeordnete weitere Schichtsystem die Poren der porösen Deckschicht nicht vollständig ausfüllt. Dadurch bleibt die Schutzwirkung der porösen Deckschicht sowie ein ausreichender Gaszutritt zur Drei-Phasen-Grenze erhalten. Das Material der weiteren Schicht wird dabei genutzt, um die Funktionseigenschaften der Elektrode des Gassensors gezielt zu modifizieren. Die Modifikation kann dabei zur Einstellung der spezifischen Gasselektivität und/oder der Regellage des Sensors dienen.

Mit den in den Unteransprüchen aufgeführten Maßnahmen sind vorteilhafte Weiterbildungen des erfindungsgemäßen Gassensors und des erfindungsgemäßen Verfahrens möglich. Ein besonders vorteilhaft für Mischpotentiale ausgebildeter Sensor wird erreicht, wenn nach der Abscheidung der weiteren Schicht das Schichtsystem einer thermischen Nachbehandlung unterzogen wird. Beispielsweise hat sich für eine Pt/Au-Elektrode ein Temperaturbereich von 1200 °C ± 100 °C als günstig herausgestellt. Bei dieser Temperatur diffundieren die Metallatome der weiteren Schicht in das Metall der benachbarten Basisschicht ein. Ein weiterer Vorteil besteht darin, daß als elektrisch leitende Basisschicht eine Cermet-Schicht verwendet wird, die aufgrund ihres keramischen Anteils beim Sintern des keramischen Körpers eine feste Verbindung mit dem Festelektrolyten eingeht. Durch die Ausbildung mehrerer weiterer Schichten und durch eine entsprechende Materialwahl der Schichten ist es außerdem möglich, neben der Einstellung der Selektivität die katalytische Aktivität der Elektrode noch gezielter zu modifizieren.

### Zeichnung

Ausführungsbeispiele der Erfindung sind in der Zeichnung dargestellt und in der nachfolgenden Beschreibung näher erläutert. Es zeigen Figur 1 einen Schnitt durch einen erfindungsgemäßen Gassensor, Figur 2 eine vergrößerte Schnittdarstellung eines ersten Ausführungsbeispiels einer Elektrode des erfindungsgemäßen Gassensors und Figur 3 eine vergrößerte Schnittdarstellung eines zweiten Ausführungsbeispiels einer Elektrode des erfindungsgemäßen Gassensors.

### Ausführungsbeispiele

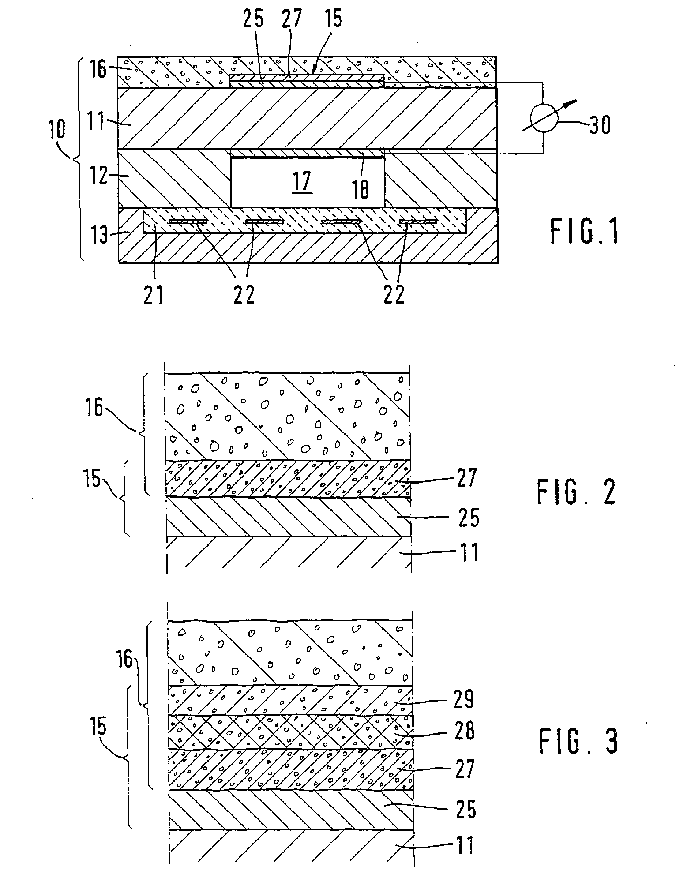

In Figur 1 ist ein Gassensor mit einem Sensorelement-Basiskörper 10 dargestellt, der einen Aufbau besitzt, wie er für Sauerstoffsensoren vom Nernst-Typ (Lambda-Sonden) Verwendung findet. Der Basiskörper 10 ist beispielsweise aus mehreren keramischen Festelekrolyt-Folien 11, 12, 13 aufgebaut, die beispielsweise aus mit Y₂O₃ stabilisiertem ZrO₂ bestehen. Auf der äußeren Großfläche der ersten Folie 11 ist eine äußere Meßelektrode 15 mit einer darüberliegenden porösen Deckschicht 16 angeordnet. Die Deckschicht 16 besteht beispielsweise aus porösem ZrO₂ oder Al₂O₃. In die zweite Folie 12 ist ein Referenzkanal 17 eingebracht, der mit einer Referenzatmosphäre, beispielsweise Luft, in Verbindung steht. Im Referenzkanal 17 ist eine auf der ersten Folie 11 angeordnete und der Meßelektrode 15 zugewandte Referenzelektrode 18 angeordnet. In den Basiskörper 10 ist ferner eine Heizeinrichtung 22 integriert, wobei auf die dritten Folie 13 elektrische Isolationsschichten 21 aufgebracht sind, in denen die Heizeinrichtung 22 eingebettet ist. Die Heizeinrichtung 22 wird als elektrische Widerstandsheizung betrieben.

Gemäß einem ersten Ausführungsbeispiel besitzt die Meßelektrode 15 den in Figur 2 dargestellten Schichtaufbau. Danach befindet sich auf der Folie 11 des Basiskörpers 10 eine elektrisch leitende Basisschicht 25 aus beispielsweise einem Pt-Cermet. Auf der Basisschicht 25 liegt die Deckschicht 16. In den Poren der Deckschicht 16 ist gemäß Figur 2 benachbart zur Basisschicht 25 auf dieser eine weitere Schicht 27 ausgebildet. Diese Schicht 27 hat unmittelbaren Kontakt mit der Basisschicht 25. Die Basisschicht 25 und die weitere Schicht 27 bilden die Meßelektrode 15. Auf die Herstellung der Schicht 27 wird später eingegangen.

Die Schicht 27 kann dabei aus einem Material bestehen, das die Gleichgewichtseinstellung des Gasgemisches an der Elektrodenoberfläche inhibiert bzw. hemmt. Derartige Materialien sind beispielsweise Edelmetalle (Gold, Rhodium, Iridium), Halbedelmetalle (Palladium, Silber), Basismetalle (Kupfer, Wismut, Nickel, Chrom) oder ein Gemisch dieser Metalle. Im vorliegenden Ausführungsbeispiel gemäß Figur 2 besteht die weitere Schicht 27 aus Gold. Dadurch wird die Meßelektrode 15 des Sensors in Figur 1 zu einer Mischpotentialelektrode umformiert, die selektiv auf Kohlenwasserstoffe (HC) ist.

Mischpotentialelektroden sind Elektroden, die die Gleichgewichtseinstellung des Gasgemisches nicht oder nicht vollständig zu katalysieren vermögen. Dabei bildet die Meßelektrode 15 zusammen mit der im Referenzkanal 17 angeordneten Referenzelektrode 18 aus beispielsweise Pt einen sogenannten Mischpotentialsensor. Das die Gleichgewichtseinstellung des Gasgemisches nicht oder nicht vollständig katalysierende Material der Schicht 27 der Meßelektrode 15 bewirkt, daß an der Meßelektrode 15 zwischen dem Sauerstoff und den oxidierbaren Gaskomponenten eine Konkurrenzreaktion stattfindet.
Dementsprechend wird das im Meßgas mitgeführte CO mit dem freier Sauerstoff kaum zu CO₂ umgesetzt. Folglich gelangt sowohl freier Sauerstoff wie auch CO an die Drei-Phasen-Grenze der Meßelektrode 15 und trägt dort zur Signalbildung bei. Zwischen der Meßelektrode 15 und der Referenzelektrode 18, an der mit der Referenzluft ein konstanter Sauerstoffpartialdruck anliegt, bildet sich ein Potentialunterschied aus, der als EMK von einem Meßinstrument 30 abgegriffen werden kann. Die EMK ist somit abhängig von den oxidierbaren Gaskomponenten. Durch eine entsprechende Materialwahl für die weitere Schicht 27 kann somit die Selektivität der Meßelektrode 15 gezielt auf eine Gasspezies eingestellt werden, so daß die Querempfindlichkeit zu anderen Gaskomponenten vermindert wird. Außerdem kann z. B. das Niedertemperaturverhalten eines Sauerstoffsensors durch eine Rh-Schicht auf einer Pt-Elektrode verbessert werden.

Ein zweites Ausführungsbeispiel eines Schichtsystems für die Meßelektrode 15 geht aus Figur 3 hervor. Dort ist über der Basisschicht 25 in den Poren der Deckschicht 16 die Schicht 27 und über der Schicht 27 eine zweite Schicht 28 und über der Schicht 28 eine dritte Schicht 29 ausgebildet. Die Schicht 27 besteht bei dem Ausführungsbeispiel gemäß Figur 3 beispielsweise aus Gold, die Schicht 28 beispielsweise aus Rhodium oder Iridium und die Schicht 29 aus Nickel oder Chrom. Dieses Auführungsbeispiel zeigt, daß in einfacher Weise ein komplizierter, mehrlagiger Elektrodenaufbau realisierbar ist. Mit dem in Figur 3 dargestellten Schichtaufbau und/oder durch eine entsprechende Materialwahl für die Schichten 27, 28, 29 lassen sich z. B. die katalytischen Eigenschaften der Elektrode gezielt modifizieren.

Zur Herstellung des Sensors gemäß Figur 1 wird beispielsweise der beschriebene Sensorelement-Basiskörper 10 verwendet. Dazu werden die Folien 11, 12, 13 im grünen (ungesintert) Zustand mit den entsprechenden Funktionsschichten versehen. Die erste Folie 11 wird dabei auf der einen Großfläche mit einer Pt-Cermet-Paste zur Herstellung der Basisschicht 25 und auf der anderen Großfläche ebenfalls mit einer Pt-Cermet-Paste zur Herstellung der Referenzelektrode 18 bedruckt. Auf die Großfläche der Folie 11 wird über die Pt-Cermet-Paste der Basisschicht 25 die Deckschicht 16 durch beispielsweise Siebdrucken oder Aufpinseln aufgebracht. Das Material der Deckschicht 16 enthält dabei Porenbildner, die beim späteren Sintern verdampfen bzw. verbrennen und dadurch die Poren ausbilden. Auf die Folie 13 werden in Siebdruckschritten die Isolationsschichten 21 und zwischen die Isolationsschichten 21 die Heizeinrichtung 22 gedruckt. Die so mit den Funktionsschichten bedruckten Folien 11 und 13 werden mit der Folie 12, in die vorher der Referenzkanal 17 eingestanzt wurde, zusammenlaminiert und bei einer Temperatur von beispielsweise 1400 °C gesintert.

Nach dem Sintern liegt der Basiskörper 10 vor, der dem Aufbau eines Sensorelements eines Sauerstoffsensor zur Bestimmung des Lambda-Wertes in Gasgemischen entspricht. Bei den vorliegenden Ausführungsbeispielen wird der im gesinterten Zustand vorliegende Basiskörper 10 mit einer Schicht 27 gemäß Figur 2 oder mit mehreren Schichten 27, 28, 29 gemäß Figur 3 versehen, wobei die Schicht 27 bzw. die Schichten 27, 28, 29 in Schichtebenen in den Poren der porösen Deckschicht 16 ausgebildet sind.

Die Herstellung der Schichten 27, 28, 29 erfolgt durch galvanisches Abscheiden. Dazu wird der keramische Körper in ein Galavanikbad gegeben. Die Basisschicht 25 wird als Kathode elektrisch geschaltet, wobei der am Sensorelement-Basiskörper 10 vorhandene Anschlußkontakt der Basisschicht 13 zur Kontaktierung genutzt wird. Als Anode wird beispielsweise in das Galvanikbad ein Metall getaucht, das dem Metall der jeweils abzuscheidenden Schicht 27, 28, 29 entspricht (galvanisches Verfahren mit Opferanode). Als Elektrolyte dienen beispielsweise wasserlösliche, ionische Salze der betreffenden Metalle, wie beispielsweise HAuCl₄, IrCl₃ x H₂O oder RhCl₃ x H₂O.

Zur Herstellung eines Sensor zur Bestimmung von Kohlenwasserstoffen wird ein Schichtsystem gemäß Figur 2 gewählt, wobei als weitere Schicht 27 eine Gold-Schicht auf der Basisschicht 25 aus Pt-Cermet galvanisch abgeschieden wird. Dazu wird z. B. der gesinterte Basiskörper 10 in ein Galvanikbad mit einem HAuCl₄-Elektrolyt gegeben, wobei eine Gold-Anode eingesetzt wird. Bei einer Stromstärke von 0,5 bis 2 mA und einer Stromdauer von 15 bis 50 Minuten wird auf der Pt-Cermet Basisschicht 25 die Schicht 27 aus Gold mit einer Schichtdicke von beispielsweise 1-5 µm abgeschieden. Die Schicht 27 bildet sich dabei in den Poren der Deckschicht 16 aus. Nach dem Abscheiden der Schicht 27 wird der keramische Körper einer Temperbehandlung bei einer Temperatur von beispielsweise 1200° C unterzogen. Während des Temperns bildet sich zwischen dem Pt der Basisschicht 25 und dem Gold der Schicht 27 eine Legierung aus, nämlich eine platinreiche Goldphase und eine goldreiche Platinphase. Dadurch wird die katalytisch Aktivität des Pt der Pt-Cermet-Basisschicht 25 modifiziert und es entsteht als Meßelektrode 15 eine Mischpotentialelektrode, die selektiv gegenüber Kohlenwasserstoffen ist.

Das Schichtsystem gemäß Figur 3 wird ebenfalls auf galvanischem Wege hergestellt, wobei beim galvanischen Abscheiden nacheinander die entsprechenden Anodenmaterialien und/oder die entsprechende Galvanikbäder eingesetzt werden. Neben den in den Figuren 2 und 3 dargestellten und beschriebenen Schichtsystemen sind auch weitere Kombinationen und Schichtsysteme für Elektroden von Gassensoren denkbar, die in einer porösen Schicht auf eine elektrisch leitende Basisschicht abgeschieden werden.

## Patentansprüche

1. Gassensor mit einem Festelektrolyten, mit mindestens einer auf dem Festelektrolyten (11) angeordneten Meßelektrode (15) wobei die Meßelektrode (15) eine elektrisch leitende Basisschicht (25) und mindestens eine weitere metallische Schicht (27, 28, 29) aufweist und mit einer porösen Deckschicht (16), die über die Basisschicht gelegt ist, **dadurch gekennzeichnet, daß** , wobei die weitere metallische Schicht (27, 28, 29) benachbart zur Basisschicht (25) in den Poren der porösen Deckschicht (16) ausgebildet ist.

2. Gassensor nach Anspruch 1 oder 2, **dadurch gekennzeichnet, daß** die weitere Schicht (27, 28, 29) aus Edelmetallen, Halbedelmetallen, Basismetallen oder aus einem Gemisch dieser Metalle besteht.

3. Gassensor nach Anspruch 1, 2 oder 3, **dadurch gekennzeichnet, daß** mehrere weitere Schichten (27, 28, 29) in beliebiger Reihenfolge auf die Basisschicht (25) aufgebracht sind.

4. Gassensor nach Anspruch 1, **dadurch gekennzeichnet, daß** die Basisschicht (25) eine Cermet-Schicht ist.

5. Gassensor nach Anspruch 5, **dadurch gekennzeichnet, daß** die Basisschicht (25) eine Pt-Cermet-Schicht ist.

6. Verfahren zur Herstellung eines Gassensors mit einer auf einem Festelektrolyte (11) angeordneten elektrisch leitenden Basisschicht (25) einer Messelektrode (15) und einer über der Basisschicht angeordneten porösen Deckschicht (16) wobei zumindest der Festelektrolyt und die Basisschicht zu einem keramischen Basiskörper gesintert werden, **dadurch gekennzeichnet, daß** nach dem Sintern durch die poröse Deckschicht hindurch auf der Basisschicht mindestens eine weitere metallische Schicht (27, 28, 29) galvanisch abgeschieden wird.

7. Verfahren nach Anspruch 7, **dadurch gekennzeichnet, daß** die weitere Schicht kathodisch abgeschieden wird.

8. Verfahren nach Anspruch 7 , **dadurch gekennzeichnet, daß** der gesinterte Basiskörper in ein Galvanikbad gegeben wird, daß die Basisschicht als Kathode unter Nutzung der beim Basiskörper bereits vorhandenen Anschlußkontakte geschaltet wird und daß als Anode ein Metall verwendet wird, das dem Material der weiteren Schicht entspricht.

9. Verfahren nach Anspruch 7, **dadurch gekennzeichnet, daß** nach dem galvanischen Abscheiden der weiteren Schicht das Schichtsystem einer weiteren Wärmebehandlung unterzogen wird.

10. Verfahren nach Anspruch 10, **dadurch gekennzeichnet, daß** die Temperatur der weiteren Wärmebehandlung unterhalb der Sintertemperatur des keramischen Körpers liegt.

## Claims

1. Gas sensor having a solid electrolyte, having at least one measurement electrode (15), which is arranged on the solid electrolyte (11), with the measurement electrode (15) having an electrically conductive base layer (25) and at least one further metallic layer (27, 28, 29), and having a porous covering layer (16) which is placed over the base layer, **characterized in that** the further metallic layer (27, 28, 29) is formed adjacent to the base layer (25) in the pores of the porous covering layer (16).

2. Gas sensor according to Claim 1, **characterized in that** the further layer (27, 28, 29) is composed of noble metals, semi-noble metals, base metals or from a mixture of these metals.

3. Gas sensor according to Claim 1 or 2,
**characterized in that** a plurality of further layers (27, 28, 29) are applied in any desired sequence to the base layer (25).

4. Gas sensor according to Claim 1, **characterized in that** the base layer (25) is a cermet layer.

5. Gas sensor according to Claim 4, **characterized in that** the base layer (25) is a Pt-cermet layer.

6. Method for production of a gas sensor having an electrically conductive base layer (25), which is arranged on a solid electrolyte (11), of a measurement electrode (15) and having a porous covering layer (16), which is arranged over the base layer, with at least the solid electrolyte and the base layer being sintered to form a ceramic base body, **characterized in that** at least one further metallic layer (27, 28, 29) is electrochemically deposited on the base layer through the porous covering layer after the sintering process.

7. Method according to Claim 6, **characterized in that** the further layer is deposited cathodically.

8. Method according to Claim 6, **characterized in that** the sintered base body is inserted in an electrochemical bath, **in that** the base layer is connected as a cathode using the connecting contacts which are already provided in the base body, and **in that** a metal which corresponds to the material of the further layer is used as the anode.

9. Method according to Claim 6, **characterized in that**, once the further layer has been deposited electrochemically, the layer system is subjected to further heat treatment.

10. Method according to Claim 9, **characterized in that** the temperature of the further heat treatment is below the sintering temperature of the ceramic body.

## Revendications

1. °) Détecteur de gaz comportant un électrolyte solide avec au moins une électrode de mesure (15) installée sur l'électrode solide (11) dans lequel l'électrode de mesure (15) comporte une couche de base électroconductrice (25) et au moins une autre couche métallique (27, 28, 29) et une couche de couverture (16), poreuse, au-dessus de la couche de base,
**caractérisé en ce que**
l'autre couche métallique (27, 28, 29) est réalisée au voisinage de la couche de base (25) dans les pores de la couche de couverture poreuse (16).

2. °) Détecteur de gaz selon la revendication 1 ou 2,
**caractérisé en ce que**
l'autre couche (27, 28, 29) est en métaux nobles, en métaux semi-nobles, en métaux de base ou en une combinaison de ces métaux.

3. °) Détecteur de gaz selon les revendications 1, 2 ou 3,
**caractérisé par**
plusieurs autres couches (27, 28, 29) appliquées dans un ordre quelconque sur la couche de base (25).

4. °) Détecteur de gaz selon la revendication 1,
**caractérisé en ce que**
la couche de base (25) est une couche cermet.

5. °) Détecteur de gaz selon la revendication 4,
**caractérisé en ce que**
la couche de base (25) est une couche Pt-cermet.

6. °) Procédé de fabrication d'un détecteur de gaz comportant une couche de base (25) électroconductrice installée sur un électrolyte solide (11), une électrode de mesure (15) et une couche de couverture (16), poreuse, au-dessus de la couche de base,
au moins l'électrolyte solide et la couche de base étant frittés pour former un corps de base céramique,
**caractérisé en ce qu'**
après le frittage on dépose par voie galvanique à travers la couche de couverture poreuse, sur la couche de base, au moins une autre couche métallique (27, 28, 29).

7. °) Procédé selon la revendication 6,
**caractérisé en ce qu'**
on dépose l'autre couche par un procédé cathodique.

8. °) Procédé selon la revendication 6,
**caractérisé en ce que**
le corps de base fritté est placé dans un bain galvanique, on branche la couche de base comme cathode en utilisant le contact de branchement existant déjà sur le corps de base et comme anode on utilise un métal qui correspond à la matière de l'autre couche.

9. °) Procédé selon la revendication 6,
**caractérisé en ce qu'**
après le dépôt galvanique de l'autre couche on soumet le système de couches à un autre traitement thermique.

10. °) Procédé selon la revendication 9,
**caractérisé en ce que**
la température de l'autre traitement thermique est inférieure à la température de frittage du corps céramique.
